(19) Europäisches Patentamt / European Patent Office / Office européen des brevets

(11) **EP 0 821 037 B1**

(12) **FASCICULE DE BREVET EUROPEEN**

(45) Date de publication et mention
de la délivrance du brevet:
**14.11.2007 Bulletin 2007/46**

(51) Int Cl.:
***C08L 77/00*** *(2006.01)*

(21) Numéro de dépôt: **97401629.7**

(22) Date de dépôt: **08.07.1997**

(54) **Compositions à base de polyamide résistant aux chocs**

Schlagzähe Polyamidzusammensetzungen

Shock resistant polyamide compositions

(84) Etats contractants désignés:
**BE CH DE ES FI FR GB IT LI NL SE**

(30) Priorité: **23.07.1996 FR 9609238**

(43) Date de publication de la demande:
**28.01.1998 Bulletin 1998/05**

(73) Titulaire: **ARKEMA FRANCE**
**92700 Colombes (FR)**

(72) Inventeurs:
• **Perret, Patrice**
**27470 Serquigny (FR)**
• **Bouilloux, Alain**
**27300 Bernay (FR)**

(74) Mandataire: **Delprat, Corinne et al**
**ARKEMA FRANCE**
**Département Propriété Industrielle**
**420, rue d'Estienne d'Orves**
**92705 Colombes Cedex (FR)**

(56) Documents cités:
**EP-A- 0 096 264        EP-A- 0 186 790**
**US-A- 4 174 358        US-A- 5 070 145**

EP 0 821 037 B1

**Description**

La présente invention concerne des compositions à base de polyamide résistant au choc, elle concerne plus particulièrement des compositions comprenant au moins un polyamide (A) et au moins un copolymère (B) de l'éthylène et d'au moins un anhydride d'acide (ou acide) carboxylique insaturé telles que l'indice choc/fluidité des compositions comprenant 60 parties de (A) pour 10 parties de (B) et des fibres de verre est supérieur à 0,9.

L'indice choc/fluidité (CF) est défini comme le rapport du produit (i) du choc entaillé IZOD à 23° C par le MFi (Melt Flow index) de la composition comprenant (A) et (B) au produit (ii) du choc par le MFi de la même composition mais ne comprenant pas (B).

Cet indice CF peut être obtenu par un choix des proportions de (A) et (B) et de la quantité d'anhydride ou d'acide dans le copolymère (B) ainsi qu'il sera expliqué plus loin.

L'amélioration de la résistance aux chocs des polyamides est obtenue généralement par incorporation sous forme d'une phase dispersée d'un modifiant choc qui présente un caractère élastomère et des fonctions réactives (acide acrylique, anhydride maléique) susceptibles de réagir avec des groupements fonctionnels de la matrice polyamide. Cette réactivité permet d'assurer une dispersion fine et homogène de l'élastomère, une bonne adhésion à l'interface nodule matrice mais conduit à une baisse importante de la fluidité. Cette forte évolution de la viscosité est nuisible à la mise en oeuvre, spécialement pour les pièces injectées fines ou de grandes dimensions.

L'art antérieur a déjà décrit des compositions résistant au choc à base de polyamide.

EP 96 264 décrit des polyamides de viscosité comprise entre 2,5 et 5 renforcés par des copolymères éthylène/ (méth)acrylate d'alkyle en $C_2$ à $C_8$/acide ou anhydride insaturé et comprenant 0,5 à 8 % en poids d'acide ou d'anhydride, les exemples ne montrent que la teneur de 4 %.

US 5 070 145 décrit des polyamides renforcés par un mélange (i) d'un polyéthylène ou d'un copolymère éthylène/(méth)acrylate d'alkyle et (ii) d'un copolymère éthylène/(méth)acrylate d'alkyle/anhydride maléique.

Les copolymères utilisés contiennent 2,5 à 3 % en poids d'anhydride maléique.

US 4 174 358 décrit des polyamides renforcés se présentant sous la forme d'une matrice de polyamide dans laquelle sont dispersés des nodules inférieurs à 1 $\mu$m ayant un certain module, devant être aussi une fraction du module du polyamide. De très nombreux renforçants sont décrits, quelques-uns ayant des fonctions époxyde. La plupart sont des polymères ayant des fonctions acides ou anhydrides neutralisées ou sont des mélanges à base d'EPDM.

Tout cet art antérieur n'a exemplifié que des renforçants ayant des fonctions acides ou anhydride d'acide ou des EPDM, et il n'est fait aucune mention de la viscosité des polyamides renforcés. On verra dans les exemples comparatifs de la présente invention que le comportement des modifiants de l'art antérieur n'a rien à voir avec ceux de la présente invention.

Dans les exemples, on ne réalise que des éprouvettes de faibles dimensions (4 x 6 x 50 mm) pour effectuer les mesures de la résistance aux chocs.

Il est clair que sur de telles dimensions et dans des conditions de laboratoire, la viscosité est sans importance.

Il en est tout autrement pour les pièces fines ou de plus grandes dimensions ou encore de forme compliquée, ces pièces devant être produites à des cadences industrielles.

EP 186 790 décrit des polyamides 6 modifiés par des copolymères éthylène/acrylate de n-butyle/anhydride maléique contenant moins d'anhydride que l'art antérieur pour éviter une baisse importante de la fluidité. Les exemples montrent des valeurs d'anhydride de 0,22 % ou 0,7 % en poids d'anhydride maléique. La quantité de copolymère est soit de 8,7, soit de 25 parties pour 100 parties de polyamide (c'est-à-dire 8 ou 20 % en poids du polyamide modifié par le copolymère).

La demanderesse a trouvé qu'il existait des quantités du copolymère (B) et des teneurs en anhydride ou en acide du copolymère (B) qui donnaient des valeurs plus avantageuses du CF.

L'invention va être maintenant définie plus en détail.

On entend par polyamide les produits de condensation :

-   d'un ou plusieurs aminoacides, tels les acides aminocaproïques, amino-7-heptanoïque, amino-11-undécanoïque et amino-12-dodécanoïque d'un ou plusieurs lactames tels que caprolactame, oenantholactame et lauryllactame ;

-   d'un ou plusieurs sels ou mélanges de diamines telles l'hexaméthylène/diamine, la dodécanméthylènediamine, la métaxylylènediamine, le bis-p aminocyclohexylméthane et la triméthylhexaméthylène diamine avec des diacides tels que les acides isophtalique, téréphtalique, adipique, azélaïque, subérique, sébacique et dodécanedicarboxylique ou des mélanges de certains de ces monomères ce qui conduit à des copolyamides.

Par exemple la condensation du caprolactame et du lauryllactame produit le PA-6/12. L'invention concerne avantageusement le PA-6 (polycaprolactame), le PA-6,6 (polyhexaméthylène adipamide), le PA-11 (acide polyaminoundécanoïque ), le PA-12 (polylauryllactame) et le PA-6/12. Elle est plus particulièrement utile pour les PA-6 et PA-6,6.

Le copolymère (B) de l'éthylène et d'un anhydride d'acide ou un acide carboxylique insaturé peut être obtenu par copolymérisation avec l'éthylène ou par greffage sur le polyéthylène. Le greffage peut être effectué en phase solvant ou sur le polyéthylène en fusion en présence d'un peroxyde. Ces techniques de greffage sont connues en elles-mêmes. Quant à la copolymérisation de l'éthylène et d'un anhydride d'acide ou un acide carboxylique insaturé, on peut utiliser les procédés dits de polymérisation radicalaire fonctionnant habituellement à des pressions entre 200 et 2 500 bars.

Des exemples d'acides carboxyliques insaturés sont ceux ayant 2 à 20 atomes de carbone tels que les acides acrylique, méthacrylique, maléique, fumarique et itaconique, ainsi que leurs anhydrides.

Des exemples d'acides carboxyliques insaturés sont ceux ayant 2 à 20 atomes de carbone tels que les acides acrylique, méthacrylique, maléique, fumarique et itaconique.

Des acides dicarboxyliques insaturés ayant 4 à 10 atomes de carbone et leurs anhydrides, sont des monomères particulièrement préférés.

Ces monomères comprennent par exemple les acides maléique, fumarique, itaconique, citraconique, allylsuccinique, cyclohex-4-ène-1,2-dicarboxylique, 4-méthyl-cyclohex-4-ène-1,2-dicarboxylique, bicyclo(2,2,1)-hept-5-ène-2,3-dicarboxylique, x-méthylbicyclo(2,2,1)-hept-5-ène-2, 3-dicarboxylique, les anhydrides maléique, itaconique, citraconique, allylsuccinique, cyclohex-4-ène-1,2-dicarboxylique, 4-méthylènecyclohex-4-ène-1,2-dicarboxylique, bicyclo(2,2,1)hept-5-ène-2,3-dicarboxylique, et x-méthylbicyclo(2,2,1)hept-5-ène-2,2-dicarboxylique.

Le monomère est avantageusement l'acide (méth)acrylique ou l'anhydride maléique. S'agissant des copolymères (B) dans lesquels l'anhydride ou l'acide carboxylique insaturé est polymérisé, le copolymère (B) peut comprendre d'autres monomères que l'éthylène pouvant être choisis par exemple parmi :

- les alphaoléfines telles que le propylène, le butène-1, l'hexène
- les esters vinyliques d'acides carboxyliques saturés tels que l'acétate de vinyle ou le propionate de vinyle
- les esters d'acides carboxyliques insaturés tels que les (méth)acrylates d'alkyle pouvant avoir jusqu'à 24 carbones.

S'agissant des copolymères (B) dans lesquels l'anhydride ou l'acide carboxylique insaturé est greffé, il s'agit des polyéthylènes homo ou copolymères aussi bien que des élastomères contenant de l'éthylène.

A titre d'exemple on peut greffer sur les polymères suivants :

- le polyéthylène, les copolymères de l'éthylène et d'une alphaoléfine, les polyéthylènes tels que le VLDPE (PE très basse densité), le ULDPE (PE ultra basse densité) ou le PE métallocène ;
- les copolymères de l'éthylène et au moins un ester vinylique d'acide carboxylique saturé tel que l'acétate de vinyle ou le propionate de vinyle ;
- les copolymères de l'éthylène et d'au moins un ester d'acide carboxylique insaturé, tel que les (méth)acrylates d'alkyle pouvant avoir jusqu'à 24 carbones ;
- les élastomères EPR (éthylène/propylène rubber) ou les EPDM (éthylène/propylène/diène) ;
- des mélanges de polymères choisis parmi les précédents.

La quantité d'anhydride ou d'acide du copolymère (B) peut varier dans de larges limites pourvu qu'on respecte les valeurs de l'indice choc/fluidité. Avantageusement, cette quantité est au plus de 0,5 % en poids et de préférence comprise entre 0,1 et 0,5 %. Ces valeurs ne sont données que pour illustrer l'invention, on préfère utiliser l'indice CF qui tient compte de la teneur de (B) en anhydride et de la proportion de (B) dans (A).

Le copolymère (B) est avantageusement un copolymère éthylène (méth)acrylate d'alkyle / anhydride ou acide carboxylique insaturé.

Avantageusement il peut contenir jusqu'à 40% en poids de (méth)acrylate d'alkyle et jusqu'à 0,5 % en poids d'anhydride ou d'acide, de préférence 0,2 à 0,4 %.

Avantageusement le (méth)acrylate d'alkyle est choisi parmi le (méth)acrylate de méthyle, l'acrylate d'éthyle, l'acrylate de n-butyle, l'acrylate d'isobutyle, l'acrylate de 2-éthylhexyle.

La quantité de (méth)acrylate d'alkyle est avantageusement de 20 à 35%.

La quantité de (méth)acrylate d'alkyle est avantageusement de 20 à 35%.

Ce copolymère peut être obtenu par polymérisation radicalaire des monomères à haute pression telle que 200 à 3 000 bars.

Son MFi peut être compris entre 0,5 et 50 (à 190° C sous 2,16 kg).

L'indice choc fluidité est le rapport :

$$\text{Indice CF} = \frac{[\text{ choc IZOD entaillé à 23° C x MFi ] de la composition comprenant A et B}}{[\text{ choc IZOD entaillé à 23° C x MFi ] de la même composition mais ne comprenant pas (B)}}$$

La composition figurant au dénominateur est la composition sans le modifiant choc (B) mais contenant les mêmes additifs éventuels que la composition renforcée. Par exemple, si il s'agit de renforcer des compositions à base de polyamide (A) et de fibres de verre, la composition figurant au numérateur du CF contient (A), (B) et les fibres de verre et la composition figurant au dénominateur contient (A) et les fibres de verre.

Le MFi est mesuré selon la norme ISO 1133 sous un poids de 2,16 kg. La température de mesure varie selon les types de polyamides, à titre d'exemple, elle est de 235° C pour le PA-6 et 275° C pour le PA-6,6. Les compositions de l'invention peuvent contenir des anti oxydants, des anti-U.V., des charges et des ignifugeants. En particulier, elles contiennent des fibres de verre. La quantité de ces fibres peut être jusqu'à 40 parties pour 60 parties de (A) et avantageusement 30 parties pour 70 parties de (A).

La demanderesse a découvert que l'indice CF des compositions de l'invention et ses variations était très différent de celui de l'art antérieur.

Cet indice est supérieur à celui des compositions comprenant (A) et (B) dans lesquelles la teneur de (B) en anhydride ou en acide est plus élevée. Si la teneur est trop faible, par exemple inférieure à 0,1 % en poids, on ne peut obtenir une résistance au choc suffisante, si elle est au-delà de 0,7 ou 0,9 % alors, il y a une forte diminution du MFi sans que la résistance au choc ne soit améliorée.

La demanderesse a aussi découvert qu'il n'était pas nécessaire d'utiliser d'importantes proportions de (B). Il en faut une certaine quantité sinon les propriétés ne sont pas améliorées. Cette valeur basse est d'environ 10 parties de (B) pour 90 parties de l'ensemble de (A) et des fibres éventuelles sans que cette valeur soit stricte, on doit comprendre cette valeur comme pouvant être 9 ou 11. Cette quantité minimale de (B) ainsi que les teneurs de (B) en anhydride ou en acide qu'on a cité plus haut ne servent qu'à guider l'homme du métier pour préparer les compositions de l'invention. La demanderesse préfère utiliser l'indice CF parce qu'il traduit mieux l'effet de (B) à la fois selon sa quantité et selon sa teneur en anhydride (ou acide).

Selon une forme avantageuse, la présente invention concerne aussi les compositions telles que l'indice choc fluidité des compositions comprenant de 60 à 50 parties de (A) pour respectivement 10 et 20 parties de (B) ainsi que des fibres de verre reste supérieur à 0,9.

Tout ceci n'est absolument ni décrit ni suggéré dans l'art antérieur EP 186 790. Cet art antérieur dans les exemples 4 et 5 montre des teneurs de (B) en anhydride respectivement de 0,22 et 0,7 % en poids comme étant équivalentes alors que la demanderesse a montré (voir exemple et exemple comparatif de la présente demande plus loin) que des valeurs de 0,35 % (selon la présente invention et de 0,8 % (très proches du 0,7 % de EP 186 790) n'avaient rien à voir. De plus, EP 186 790 n'a montré que des mélanges de PA-6 contenant 25 parties de (B) pour 100 parties de PA-6, (B) ayant des teneurs en anhydride de 0,22 et 0,7 % en poids, ou des mélanges de 100 parties de PA-6 avec 8,7 parties de (B) ayant une teneur de 0,22 % en poids d'anhydride.

Pour des quantités de (B) aussi faibles, il n'y a pas d'amélioration significative du choc, c'est d'ailleurs pourquoi l'exemple ne montre pas les valeurs de choc.

Cet art antérieur ne cite absolument pas l'indice choc/fluidité, il ne mentionne aussi rien des polyamides renforcées par les fibres de verre. La demanderesse a aussi découvert que pour le PA-6 chargé de fibres de verre et pour des teneurs de (B) riches en anhydride telles que 1,5 % l'indice CF décroît quand la quantité de (B) augmente de 10 à 15 parties pour respectivement 60 et 55 parties de (A) ou 90 et 85 parties de l'ensemble (A) et fibres, alors que dans la présente invention l'indice est légèrement amélioré et croît très faiblement quand la quantité de (B) passe de 10 à 15 pour respectivement 60 et 55 parties de (A) ou 90 et 85 parties de l'ensemble (A) et fibres.

Quant au PA-6,6 chargé de fibres de verre, l'indice CF est presque doublé quand on passe d'un copolymère (B) riche en anhydride maléique telle que 1,5 % à un copolymère selon la présente invention. Ainsi dans le cas des polyamides chargés en fibres de verre, il n'est pas nécessaire d'utiliser d'importantes quantités de (B), on peut prendre les mêmes valeurs déjà citées plus haut pour les polyamides essentiellement non chargés en fibres de verre, c'est à dire 10 à 15 parties de (B) pour respectivement 60 à 55 parties de (A) ou 90 et 85 parties de l'ensemble (A) et fibres.

Comme précédemment, la valeur 15 ne doit pas être comprise comme une valeur stricte.

Ces compositions de l'invention se préparent par les techniques habituellement utilisées pour les thermoplastiques telles que l'extrusion ou les mélangeurs bi vis.

Avantageusement, on introduit le polyamide (A) dans la trémie d'alimentation, les fibres de verre éventuelles dans la zone fondue puis le copolymère (B) en zone fondue après l'introduction éventuelle des fibres de verre. La demanderesse a trouvé que ce procédé donnait un meilleur indice CF que si on introduisait le polyamide (A) et le copolymère (B) dans la trémie puis les fibres de verre éventuelles dans la zone fondue.

La présente invention concerne aussi les pièces injectées en particulier les pièces fines et de grandes dimensions produites avec les compositions qu'on vient de décrire.

La présente invention concerne aussi des compositions comprenant au moins un polyamide (A), au moins un copolymère (B), de l'éthylène et d'au moins un anhydride d'acide (ou acide) carboxylique insaturé et des fibres de verre telles que :

- la quantité de (B) est comprise entre 10 et 15 parties pour respectivement 90 et 85 parties de l'ensemble de (A) et des fibres éventuelles,
- la quantité d'anhydride (ou d'acide) de (B) est de 0,1 à 0,5 % en poids de (B), de préférence 0,2 à 0,4 %.

    (A) et (B) ont été définis plus haut.

Avantageusement, (B) est un copolymère éthylène -(méth)acrylate d'alkyle-anhydride (ou acide) acide carboxylique insaturé comme défini plus haut. Les différents éléments de l'invention, les qualités préférées, les quantités préférées sont les mêmes que déjà décrits plus haut.

### ***Exemples***

COMPOUNDAGE

Les compositions sont obtenues par compoundage sur une extrudeuse double vis WERNER $\varnothing$ 40, L/D 40 munie d'un système de dégazage et d'une coupe à jonc, avec un débit de 40 kg/h et une vitesse de 150 tours/mm. Les profils de température utilisés sont les suivants :

|  | **NON RENFORCES** | **RENFORCES** |
|---|---|---|
| Base PA 6 | 240 / 240 / 250 / 250° C | 260 / 260 / 260 / 260° C |
| Base PA 6 6 | 260 / 265 / 265 / 265° C | 270 / 275 / 275 / 275° C |

Pour les formulations non renforcées, les composants en granulés sont mélangés à sec puis introduits dans la trémie d'alimentation. En présence de fibre de verre, le procédé utilisé est : introduction du PA en trémis et successivement du renfort et du modifiant en zone fondue.

MOULAGE DES ECHANTILLONS

Les granulés sont séchés sous pression réduite à une température de 80° C puis sont moulés par injection sur une presse à injecter type Krauss Maffei B1 (60 T de fermeture) dans les conditions suivantes :

| | |
|---|---|
| Non renforcés base PA 6 | - Température matière 230-260° C, moule 50° C<br>- Pression d'injection 45 bars |
| Renforcé fibre de verre base PA 6 | - Température matière 260-280° C, moule 60° C<br>- Pression d'injection 200 bars |
| Non renforcé base PA 66 | - Température matière 250-280° C, moule 80° C<br>- Pression d'injection 70 bars |
| Renforcé fibre de verre base PA 6 6 | - Température matière 250-280° C, moule 80° C<br>- Pression d'injection 200 bars |

Les éprouvettes normalisées (80 x 10 x 4 mm$^3$) ainsi obtenues sont conditionnées pendant 14 jours à 23° C et 50 % d'humidité relative.

<u>Evaluation</u> :

- Module de flexion selon la norme ISO 178
- Résistance aux chocs sur des éprouvettes préalablement entaillées du type CHARPY selon la norme ISO 179 - 93 et du type IZOD selon la norme ISO 180, à différentes températures (23° C, -20° C, -40° C). Lorsque la fissure parcourt moins de 90 % de l'épaisseur en fond d'entaille de l'échantillon, la référence "pas de rupture" est signalée par un astérisque(*).
- Indice de fluidité MFi selon la norme ISO 1133 sous un poids de 2.16 kg et à des températures de 235° C et 275° C pour des composition à base respectivement de PA 6 et PA 66.

<u>Matières premières</u>

Les polyamides testés sont les polyamides 6 et 66 respectivement commercialisés par la société BASF sous les références Ultramid B3 et A3. La fibre de verre utilisée est la P327 de Vetrotex.

Les terpolymères testés sont :

TERPO 1    Terpolymère Ethylène / Acrylate d'Ethyle / Anhydride maléique 68.5 / 30 /1.5 % poids, MFI (190° C, 2.16 kg) = 7

TERPO 2    Terpolymère Ethylène / Acrylate d'Ethyle / Anhydride maléique 64.1 / 35 / 0,8 % poids, MFi (190° C, 2.16 kg) = 7

TERPO 3    Terpolymère Ethylène / Acrylate d'Ethyle / Anhydride maléique 69.7 / 30 / 0,35 % poids, MFi (190° C, 2.16 kg) = 7

**Formulations PA 6 non renforcées**

<u>Exemples comparatifs 1 à 6</u>

⇒ Teneur en modifiant 10 à 20 %

⇒ Les terpo 1 et 2 permettent d'améliorer la résistance aux chocs lorsque la teneur en modifiant est comprise entre 10 et 20 % mais avec une forte diminution du MFi.

<u>Exemples de référence 1-2-3</u>

⇒ Par contre le Terpo 3 permet d'obtenir simultanément une résistance aux chocs et une fluidité supérieures.

Les résultats figurent sur le Tableau 1.

**Formulations PA 66 non renforcées**

<u>Exemples comparatifs 7 à 12</u>

⇒ Teneur en modifiant 10 à 20 %

⇒ Les Terpo 1, 2 permettent d'améliorer sensiblement la résistance aux chocs au détriment de la fluidité.

<u>Exemples de référence 4-5-6</u>

⇒ Le Terpo 3 permet d'obtenir des résistances aux chocs moyennes, inférieures aux Terpo 1 - 2, mais avec une excellente fluidité d'où un meilleur compromis choc/fluidité.

Les résultats figurent sur le Tableau 2.

**Formulations PA 6 et 66 renforcées**

⇒ Le procédé de compoundage utilisé est :

- introduction du PA en trémis
- introduction de la fibre de verre en zone fondue
- introduction du modifiant choc en zone fondue après celle de la fibre de verre.

Exemples comparatifs 13 à 16

- L'introduction de 10 - 15 % de Terpo 1 fortement réactif au sein d'un PA + 30 % FV permet d'améliorer sensiblement les résistances aux chocs mais avec une diminution du MFi.

Exemples 7 à 10

- L'utilisation du Terpo 3 faiblement réactif permet de conserver des niveaux de chocs similaires tout en améliorant la fluidité des compounds renforcés par rapport au Terpo 1.

Les résultats figurent sur les Tableaux 3 et 4.

Tableau 1 (PA-6)

| Exemples | Composition | Choc IZOD entaillé KJ/m$^2$ IZO 180 | | | Choc CHARPY entaillé KJ/m$^2$ ISO 179 - 93 | | | Module de flexion MPa ISO 178-93 | MFi g/ 10 mn | Indice C.F |
|---|---|---|---|---|---|---|---|---|---|---|
| | | 23° C | - 20° C | - 40° C | 23° C | - 20° C | - 40° C | | | |
| | PA 6 | 8 | 6 | 5 | 8 | 5 | 3 | 1970 | 21 | 1 |
| Ex. Comp.1 | PA 6 + 10 % TERPO 1 | 17 | 7 | 6 | 20 | 8 | 6 | 1170 | 9.5 | 0,96 |
| Ex. Comp. 2 | PA 6 + 15 % TERPO 1 | 18 | 9 | 7 | 24 | 10 | 7 | 1010 | 7.8 | 0,93 |
| Ex. Comp. 3 | PA 6 + 20 % TERPO 1 | 30 | 14 | 7 | 34 * | 11 | 7 | 860 | 5.9 | 1,05 |
| Ex de référence 1 | PA 6 + 10 % TERPO 3 | 18 | 8 | 6 | 20 | 8 | 6 | 1230 | 15 | 1,61 |
| Ex de référence 2 | PA 6 + 15 % TERPO 3 | 39* | 10 | 8 | 45* | 10 | 7 | 1060 | 11.4 | 2,64 |
| Ex de référence 3 | PA 6 + 20 % TERPO 3 | 44* | 13 | 9 | 60* | 13 | 10 | 910 | 8.9 | 2,32 |
| Ex Comp. 4 | PA 6 + 10 % TERPO 2 | 17 | 7 | 5 | 20 | 8 | 6 | 1730 | 95 | 0,96 |
| Ex. Comp. 5 | PA 6 + 15 % TERPO 2 | 18 | 9 | 6 | 30 | 10 | 7 | 1500 | 6.3 | 0,67 |

(suite)

| Exemples | Composition | Choc IZOD entaillé KJ/m² IZO 180 | | | Choc CHARPY entaillé KJ/m² ISO 179 - 93 | | | Module de flexion MPa ISO 178-93 | MFi g/ 10 mn | Indice C.F |
|---|---|---|---|---|---|---|---|---|---|---|
| | | 23° C | - 20° C | - 40° C | 23° C | - 20° C | - 40° C | | | |
| | PA 6 | | | | | | | | | |
| | | 8 | 6 | 5 | 8 | 5 | 3 | 1970 | 21 | 1 |
| Ex Comp. 6 | PA 6 + 20 % TERPO 2 | 35* | 11 | 8 | 40 | 11 | 8 | 1190 | 5,4 | 1,12 |

* Pas de rupture.

Tableau 2 (PA-6,6)

| Exemples | Composition | Choc IZOD entaillé KJ/m² IZO 180 | | | Choc CHARPY entaillé KJ/m² ISO 179 - 93 | | | Module de flexion MPa ISO 178-93 | MFi g/ 10 mn | Indice C.F |
|---|---|---|---|---|---|---|---|---|---|---|
| | | 23° C | - 20° C | - 40° C | 23° C | - 20° C | - 40° C | | | |
| | PA 6 | | | | | | | | | |
| | | 8 | 6 | 5 | 8 | 3 | 3 | 2590 | 50 | 1 |
| Ex. Comp. 7 | PA 66 + 10 % TERPO 1 | 18 | 10 | 7 | 19 | 7 | 6 | 1650 | 36 | 1,44 |
| Ex. Comp 8 | PA 66 + 15 % TERPO 1 | 55* | 14 | 10 | 28 | 8 | 7 | 1410 | 13 | 1,5 |
| Ex. Comp. 9 | PA 66 + 20 % TERPO 1 | 71 * | 15 | 12 | 75* | 12 | 7 | 1210 | 3.3 | 0,58 |
| Ex de référence 4 | PA 66 + 10 % TERPO 3 | 17 | 10 | 7,5 | 18 | 9 | 8 | 1680 | 41 | 1,74 |
| Ex de référence 5 | PA 66 + 15 % TERPO 3 | 20 | 12 | 9 | 22 | 11 | 8 | 1510 | 37 | 1,85 |
| Ex de référence 6 | PA 66 + 20 % TERPO 3 | 33 * | 12 | 9 | 27 | 12 | 10 | 1318 | 24 | 1,98 |
| Ex Comp. 10 | PA 66 + 10 % TERPO 2 | 17 | 7 | 5 | 20 | 8 | 6 | 1980 | 20 | 0,85 |
| Ex. Comp. 11 | PA 66 + 15 % TERPO 2 | 16 | 9 | 6 | 30 | 10 | 7 | 1678 | 15 | 0,60 |
| Ex Comp. 12 Ex Comp. 12 | PA 66 + 20 % TERPO 2 | 50* | 11 | 8 | 40 | 11 | 8 | 1500 | 4.5 | 0,56 |

* Pas de rupture

Tableau 3 (PA-6 + fibres de verre)

| Exemples | Composition | Choc IZOD entaillé KJ/m² IZO 180 | | | Choc CHARPY entaillé KJ/m² ISO 179 - 93 | | | Module de flexion MPa ISO 178-93 | MFi g/ 10 mn | Indice C.F |
|---|---|---|---|---|---|---|---|---|---|---|
| | PA 66 + 30 % GF | 23° C | - 20° C | - 40° C | 23° C | - 20° C | - 40° C | | | |
| | | 17 | 13 | - | 12 | 9 | - | 5420 | 6.9 | 1 |
| Ex. Comp. 13 | PA 6 + 30 % GF + 10 %TERPO 1 | 26 | 16 | - | 21 | 13 | - | 4140 | 4.3 | 0,88 |
| Ex. Comp. 14 | PA 6 + 30 % GF + 15 % TERPO 1 | 28 | 16 | - | 22 | 13 | - | 4470 | 3.6 | 0,86 |
| Ex 7 | PA 6 + 30 % GF + 10% TERPO 3 | 22 | 15 | - | 18 | 11 | - | 3980 | 4.8 | 0,90 |
| Ex 8 | PA 6 + 30 % GF + 15 %TERPO 3 | 24 | 17 | - | 20 | 12 | - | 3820 | 4.6 | 0,94 |
| * Pas de rupture. | | | | | | | | | | |

Tableau 4 (PA-6,6 + Fibres de verre)

| Exemples | Composition | Choc IZOD entaillé KJ/m² IZO 180 | | | Choc CHARPY entaillé KJ/m² ISO 179 - 93 | | | Module de flexion MPa ISO 178-93 | MFi g/ 10 mn | Indice C.F |
|---|---|---|---|---|---|---|---|---|---|---|
| | PA 66 + 30 % GF | 23° C | - 20° C | - 40° C | 23° C | - 20° C | - 40° C | | | |
| | | 13 | 11 | - | 10 | 9 | - | 6400 | 17 | 1 |
| Ex. Comp. 15 | PA 66 + 30 % GF + 10 %TERPO 1 | 19 | 13 | - | 14 | 11 | - | 5180 | 4 | 0,34 |
| Ex. Comp. 16 | PA 66 + 30 % GF + 15 % TERPO 1 | 19 | 14 | - | 17 | 11 | - | 5180 | 3 | 0,25 |
| Ex 9 | PA 66 + 30 % GF + 10% TERPO 3 | 18 | 13 | - | 15 | 10 | - | 4930 | 12 | 0,97 |
| Ex 10 | PA 66 + 30 % GF + 15 %TERPO 3 | 21 | 15 | - | 18 | 11 | - | 4050 | 5 | 0,47 |

## Revendications

**1.** Compositions résistant au choc comprenant au moins un polyamide (A), au moins un copolymère (B) de l'éthylène et d'au moins un anhydride d'acide (ou acide) carboxylique insaturé, et des fibres de verre, **caractérisées en ce que** la quantité de (B) est comprise entre 10 et 15 parties pour respectivement 90 et 85 parties de l'ensemble de (A) et des fibres de verre et **en ce que** la quantité d'anhydride d'acide (ou acide) carboxylique insaturé de (B) est de 0,1 à 0,5 % en poids de (B).

**2.** Compositions selon la revendication 1, **caractérisées en ce que** la quantité d'anhydride d'acide (ou acide) carboxylique insaturé de (B) est de 0,2 à 0,4 % en poids de (B).

**3.** Compositions selon les revendications 1 et 2, **caractérisées en ce que** la quantité de fibres de verre peut être jusqu'à 40 parties pour 60 parties de (A).

**4.** Compositions selon la revendication 3, **caractérisées en ce que** la quantité de fibres de verre est de 30 parties pour 70 parties de (A).

**5.** Compositions selon l'une quelconque des revendications précédentes, **caractérisées en ce que** l'anhydride d'acide ou l'acide carboxylique insaturé sont choisis parmi l'acide acrylique, l'acide méthacrylique ou l'anhydride maléique.

**6.** Compositions selon l'une quelconque des revendications précédentes, **caractérisées en ce que** (B) est un copolymère éthylène / (méth)acrylate d'alkyle / anhydride maléique.

7. Pièces injectées produites avec les compositions selon l'une quelconque des revendications précédentes.

**Claims**

1. High-impact compositions including at least one polyamide (A), at least one copolymer (B) of ethylene and of at least one unsaturated carboxylic anhydride or acid, and glass fibres, **characterized in that** the quantity of (B) is between 10 and 15 parts per 90 and 85 parts respectively of the total made up of (A) and of the glass fibres, and **in that** the quantity of unsaturated carboxylic anhydride or acid of (B) is from 0.1 to 0.5% by weight of (B).

2. Compositions according to Claim 1, **characterized in that** the quantity of unsaturated carboxylic anhydride or acid of (B) is from 0.2 to 0.4% by weight of (B).

3. Compositions according to Claims 1 and 2, **characterized in that** the quantity of glass fibres can be up to 40 parts per 60 parts of (A).

4. Compositions according to Claim 3, **characterized in that** the quantity of glass fibres is 30 parts per 70 parts of (A).

5. Compositions according to any one of the preceding claims, **characterized in that** the unsaturated carboxylic anhydride or acid is chosen from acrylic acid, methacrylic acid and maleic anhydride.

6. Compositions according to any one of the preceding claims, **characterized in that** (B) is an ethylene/alkyl (meth) acrylate/maleic anhydride copolymer.

7. Injection-moulded parts produced with the compositions according to any one of the preceding claims.

**Patentansprüche**

1. Schlagzähe Zusammensetzungen, enthaltend mindestens ein Polyamid (A), mindestens ein Copolymer (B) von Ethylen und mindestens einem ungesättigten Carbonsäureanhydrid (oder mindestens einer ungesättigten Carbonsäure) und Glasfasern, **dadurch gekennzeichnet, daß** die Menge an (B) zwischen 10 und 15 Teilen pro respektive 90 und 85 Teile der Gesamtmenge von (A) und den Glasfasern beträgt und die Menge an ungesättigtem Carbonsäureanhydrid (oder ungesättigter Carbonsäure) von (B) 0,1 bis 0,5 Gew.-%, bezogen auf (B), beträgt.

2. Zusammensetzungen nach Anspruch 1, **dadurch gekennzeichnet, daß** die Menge an ungesättigtem Carbonsäureanhydrid (oder ungesättigter Carbonsäure) von (B) 0,2 bis 0,4 Gew.-%, bezogen auf (B), beträgt.

3. Zusammensetzungen nach den Ansprüchen 1 und 2, **dadurch gekennzeichnet, daß** die Menge der Glasfasern bis zu 40 Teile pro 60 Teile (A) betragen kann.

4. Zusammensetzungen nach Anspruch 3, **dadurch gekennzeichnet, daß** die Menge der Glasfasern 30 Teile pro 70 Teile (A) beträgt.

5. Zusammensetzungen nach einem der vorhergehenden Ansprüche, **dadurch gekennzeichnet, daß** das ungesättigte Carbonsäureanhydrid bzw. die ungesättigte Carbonsäure unter Acrylsäure, Methacrylsäure oder Maleinsäureanhydrid ausgewählt sind.

6. Zusammensetzungen nach einem der vorhergehenden Ansprüche, **dadurch gekennzeichnet, daß** es sich bei (B) um ein Ethylen/Alkyl(meth)acrylat/Maleinsäureanhydrid-Copolymer handelt.

7. Spritzgußteile, hergestellt mit den Zusammensetzungen nach einem der vorhergehenden Ansprüche.

## RÉFÉRENCES CITÉES DANS LA DESCRIPTION

**Documents brevets cités dans la description**

- EP 96264 A
- US 5070145 A
- US 4174358 A
- EP 186790 A